# EUROPEAN PATENT SPECIFICATION

(11) **EP 0 594 402 B1**
(45) Date of publication and mention of the grant of the patent: **26.07.2000**
(21) Application number: 93308309.9
(22) Date of filing: 19.10.1993
(51) Int. Cl.: H04L 7/10

(54) **Apparatus for and method of clock timing recovery in a receiver**
Anordnung und Verfahren zur empfangsseitigen Taktrückgewinnung
Dispositif et méthode pour la récupération d'horloge dans un récepteur

(30) Priority: 19.10.1992 JP 27973092
(43) Date of publication of application: 27.04.1994
(73) Proprietor: NEC CORPORATION, Tokyo (JP)
(72) Inventor: Shigemoto, Naoto, c/o NEC Corporation, Tokyo (JP)
(74) Representative: Cozens, Paul Dennis

(56) References cited:
- EP-A- 0 180 179
- CA-A- 1 220 833
- GB-A- 2 135 855
- PROCEEDINGS IEEE MILITARY COMMUNICATIONS CONFERENCE, vol.1, 30 September 1990, MONTEREY (CA) pages 141 - 145, XP221775 B.W. MAPLES ET AL. 'RAPID CLOCK RECOVERY TECHNIQUE WITH MONOTONIC PHASE ERROR METRIC.'

## Description

This invention relates to an apparatus for decoding, and a method of decoding, a signal having a repeating sequence of time slots each containing a preamble for clock timing recovery and an encoded digital signal.

The invention finds application in time division multiplex (TDM) communication systems. In a conventional TDM communication system, digital signals from different data sources are encoded and sequentially transmitted on respective time slots, or channels. For carrier and clock timing recovery, each time slot contains a preamble. At the reception site, the TDM signal is demodulated into a baseband signal using the portion of the preamble for carrier recovery, and the clock phase of each time slot is detected from the portion of the preamble for clock timing recovery. A clock recovery circuit is responsive to the clock phase of each successive time slot for generating clock pulses. By using the clock pulses, the encoded digital signal of each time slot is decoded.

However, since the clock timing of each data source is not necessarily synchronized with the clock timing of the other data sources, the preamble for clock timing recovery is required to be of sufficient length to accommodate such source-to-source clock timing differences. In addition, when noise is introduced in the immediately preceding time slot corrupting its clock phase information, the corrupted phase is used as an initial phase during the subsequent clock generation process. Therefore, the preamble of the conventional TDM communication system must be of sufficient length to ensure against such phase jitter, resulting in low transmission efficiency.

A first aspect of the invention is more particularly concerned with an apparatus for decoding a signal having a repeating sequence of time slots each containing a preamble for clock timing recovery and an encoded digital signal, the apparatus comprising:
a phase detector for detecting clock phases of the preambles of the time slots and deriving therefrom respective clock phase signals therefor;
memory means having a plurality of memory locations;
memory control means for writing such a detected clock phase signal of such a time slot into one of the memory locations and for reading a clock phase signal for a repeat of that time slot from the memory means;
clock recovery means responsive to the read clock phase signal for deriving clock pulses; and
a decoder synchronised with the derived clock pulses for decoding the encoded digital signal of each time slot to produce a decoded signal.

Such an apparatus is known from patent document GB-A-2135855. In the case of that apparatus, for each of the time slots in a sequence, the detected clock phase signals for that time slot and for the corresponding time slots in a plurality of preceding sequences are stored in memory, and the clock recovery means is responsive to the average of these stored clock phase signals. This apparatus relies on the fact that there is normally little variation in the clock phase as between a particular time slot in one sequence and the repeat of that time slot in the next sequence. By providing the clock recovery means with an average of previous clock phase signals, as in GB-A-2135855, the time taken for clock recovery can be reduced and so the length of the preamble can be reduced.

The apparatus of the first aspect of the invention is characterised in that: the memory control means is operable to write the detected clock phase signals in the memory means so that a stored clock phase signal for a particular time slot is overwritten by the detected clock phase signal for the repeat of that time slot; and detector means is provided for detecting an error rate of the decoded signal and preventing the memory control means from overwriting such a stored clock phase signal when the detected error rate is higher than a prescribed value.

This provides the advantage that, if a time slot is affected by noise, the phase information obtained from that time slot is not used by the clock recovery means. By contrast, in GB-A-2135855, the phase information from the noisy time slot would be used in calculating the average phase information. Furthermore, the first aspect of the invention provides the advantage that, for each time slot in the sequence, only one memory location is required.

Preferably, the memory control means of the apparatus of the first aspect of the invention includes means for so writing such a detected clock phase signal at the end of the respective time slot, and means for reading that clock phase signal as such a read clock phase signal at the beginning of the repeat of that time slot.

In accordance with a second aspect of the present invention, there is provided a complementary method of decoding a signal having a repeating sequence of time slots each containing a preamble for clock timing recovery and an encoded digital signal, the method comprising the steps of:
(a) detecting clock phases of the preambles of the time slots and deriving therefrom respective clock phase signals therefor;
(b) writing such a detected clock phase signal of such a time slot into one of a plurality of locations of a memory;
(c) reading a clock phase signal for a repeat of that time slot from the memory;
(d) deriving clock pulses in response to the read clock phase signal; and
(e) decoding the encoded digital signal of each time slot synchronously with the derived clock pulses to produce a decoded signal;
   characterised by:
(f) the detected clock phase signals being written in the memory so that a stored clock phase signal for a particular time slot is overwritten by the detected clock phase signal for the repeat of that time slot;
(g) detecting whether an error rate of the decoded signal is higher or lower than a prescribed value; and
(h) if the detected error rate is lower than the prescribed value repeating the steps (b) to (g), and if the detected error rate is higher than the prescribed value repeating the steps (c) to (e) and (g).

Preferably, such a detected clock phase signal is so written at the end of the respective time slot, and that clock phase signal is so read as such a read clock phase signal at the beginning of the repeat of that time slot.

The present invention will be described in further detail , by way only of example, with reference to the accompanying drawings, in which:
Fig. 1 is a block diagram of a digital receiving apparatus according to an embodiment of the present invention; and
Fig. 2 is a timing sequence illustrating the relationships between stored and read clock phase together with read/write address timing.

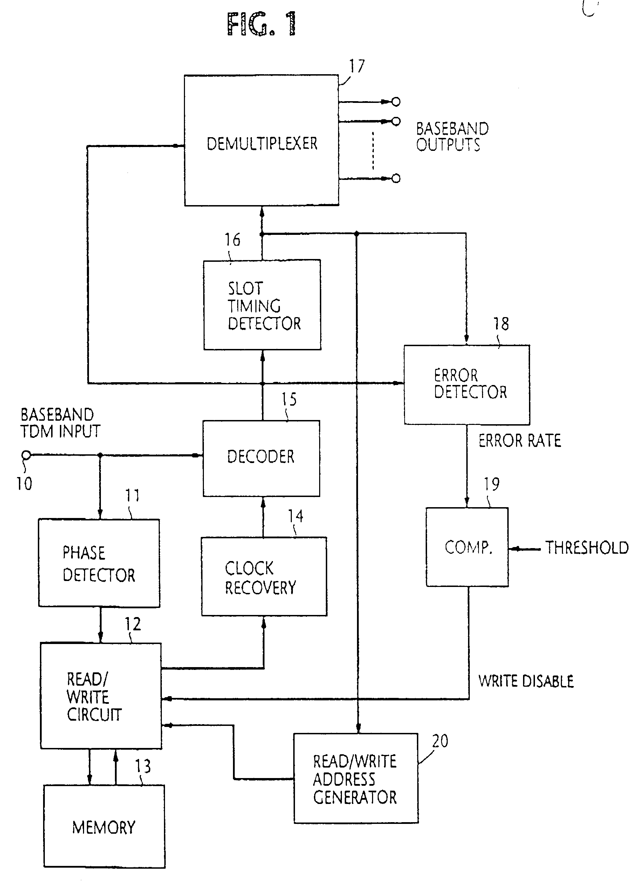

Referring now to Fig. 1, there is shown a digital receiving apparatus according to one embodiment of the present invention. The apparatus is adapted to receive a time division multiplex (TDM) signal in which a plurality of channel signals are multiplexed on individual time slots and converted to a baseband TDM signal by a demodulator, not shown. Each time slot of the TDM signal contains encoded data from an individual channel source which is preceded by a preamble for clock timing recovery. The baseband TDM signal is applied through an input terminal **10** to a phase detector **11** for detecting the initial clock phase of the preamble of each multiplexed channel signal to produce a signal representative of the clock phase, which is applied to a read/write control circuit **12**. In a manner to be described, read/write control circuit **12** is responsive to the output of a read/write address generator **20** to store the clock phase signal into a memory **13** and read the stored signal out of the memory into a clock recovery circuit **14**. Memory **13** has a plurality of storage locations respectively corresponding to the multiplexed channels of the TDM input for storing the clock phase signal of the corresponding channels. Clock recovery circuit **14** derives clock timing pulses for each time slot, or channel, from the clock phase signal read out of the memory **13** via read/write control circuit **12**.

The baseband TDM signal is also fed into a decoder **15**. By using the clock timing pulses supplied from the clock recovery circuit **14**, the decoder **14** performs a decoding operation on the digital data contained in each time slot and supplies the decoded time slot signal to a slot timing detector **16**, a demultiplexer **17** and an error detector **18**. The slot timing detector **16** derives a timing signal from each time slot of the decoded signal and applies it to the demultiplexer **17** in which the output of decoder **15** is demultiplexed into individual signals. The slot timing signal is also applied to the error detector **18** where it is used to analyze the decoded time slot signal to detect error bits and produce a signal representative of the error rate of each time slot. The error rate signal is compared in a comparator **19** with a threshold. If the error rate is higher than the threshold value, comparator **19** supplies a write disabling signal to the read/write control circuit **12**.

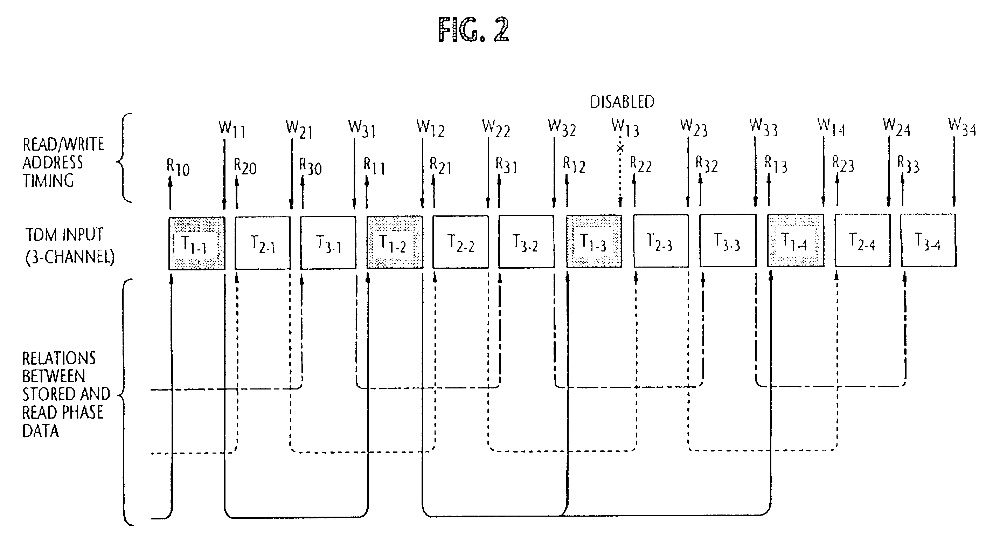

In response to the output of slot timing detector **16**, the read/write address generator **20** generates read and write address signals as shown in Fig. 2 in which a three-channel TDM input is shown for simplicity. A write address signal Wᵢⱼ (where i and j are the channel identifier and the time-slot sequence number, respectively) is generated at the end of each time slot Tᵢ₋ⱼ to store the clock phase signal of a time slot Tᵢ₋ⱼ into the memory location Mᵢ of memory **13**, and a read address signal Rᵢⱼ is generated at the beginning of the time slot Tᵢ₋ⱼ to read out the clock phase signal of previous time slot Tᵢ₋₍ⱼ₋₁₎ from the memory location Mᵢ.

For example, in the absence of write disabling signal from comparator **19**, the clock phase signal of time slot T₁₋₁ is written into memory location M₁ at the end of this time slot in response to a write address signal W₁₁ and read out of this memory location at the beginning of the next time slot T₁₋₂ in response to a read address signal R₁₂ and the clock phase signal of time slot T₁₋₂ is written into the same memory location M₁ at the end of time slot T₁₋₂ in response to a write address signal W₁₂, so that the contents of memory location M₁ is overwritten with the latest clock phase signal and read out of this memory location at the beginning of the next time slot T₁₋₃ in response to a read address signal R₁₃.

If the next time slot T₁₋₃ is severely affected by noise, it is likely that the clock phase of this slot is also severely affected. The error rate of time slot T₁₋₃ is thus determined by comparator **19** to be higher than the threshold, and a write disabling signal is generated. The read/write control circuit **12** is prevented from responding to a write address signal W₁₃ and the clock phase signal of time slot T₁₋₂ is prevented from being overwritten with the clock phase signal of time slot T₁₋₃. Therefore, in response to a read address signal R₁₄ the clock phase signal of time slot T₁₋₂ is retrieved again from memory location M₁ at the beginning of the next time slot T₁₋₄ and supplied to the clock recovery circuit **14** for generating clock pulses for time slot T₁₋₄.

Since the clock timing of each data source is the same for all time slots of the data source, constant phase data is read out of each memory location. Thus, synchronization can be quickly established in the clock recovery circuit **14**, and hence, the present invention requires a short preamble for clock timing recovery. Additionally, if time slot T₁₋₃ is affected by noise, the read/write controller **12** prevents the phase information of this time slot from overwriting the phase information obtained from the previous time slot T₁₋₂ so that phase information not affected by noise can be used for clock recovery during the subsequent time slot T₁₋₄.

In summary, the preferred embodiment of the present invention includes some or all of the following features.

A clock phase signal of each time slot of a TDM signal is stored into a corresponding memory location and a clock phase signal of a subsequent time slot is read from a memory location corresponding to the subsequent time slot for recovering clock pulses. A decoder is synchronized with the clock pulses for decoding an encoded digital signal of each time slot to produce a decoded signal. The error rate of the decoded signal of each time slot is detected and compared with a prescribed value. When the detected error rate is determined to be higher than the prescribed value, the write operation of the memory is disabled to prevent the clock phase signal stored in a memory location corresponding to the decoded signal from being overwritten with a subsequent clock phase signal.

It will be understood that the present invention has been described above purely by way of example, and modifications of detail can be made within the scope of the invention.

## Claims

1. An apparatus for decoding a signal having a repeating sequence of time slots each containing a preamble for clock timing recovery and an encoded digital signal, the apparatus comprising:
a phase detector (11) for detecting clock phases of the preambles of the time slots and deriving therefrom respective clock phase signals therefor;
memory means (13) having a plurality of memory locations;
memory control means (12,20) for writing such a detected clock phase signal of such a time slot into one of the memory locations and for reading a clock phase signal for a repeat of that time slot from the memory means;
clock recovery means (14) responsive to the read clock phase signal for deriving clock pulses; and
a decoder (15) synchronised with the derived clock pulses for decoding the encoded digital signal of each time slot to produce a decoded signal;
characterised in that:
the memory control means is operable to write the detected clock phase signals in the memory means so that a stored clock phase signal for a particular time slot is overwritten by the detected clock phase signal for the repeat of that time slot; and
detector means (18,19) is provided for detecting an error rate of the decoded signal and preventing the memory control means from overwriting such a stored clock phase signal when the detected error rate is higher than a prescribed value.

2. An apparatus as claimed in claim 1, wherein the memory control means includes means for writing such a detected clock phase signal at the end of the respective time slot, and means for reading that clock phase signal at the beginning of the repeat of that time slot.

3. A method of decoding a signal having a repeating sequence of time slots each containing a preamble for clock timing recovery and an encoded digital signal, the method comprising the steps of:
(a) detecting clock phases of the preambles of the time slots and deriving therefrom respective clock phase signals therefor;
(b) writing such a detected clock phase signal of such a time slot into one of a plurality of locations of a memory (13);
(c) reading a clock phase signal for a repeat of that time slot from the memory;
(d) deriving clock pulses in response to the read clock phase signal; and
(e) decoding the encoded digital signal of each time slot synchronously with the derived clock pulses to produce a decoded signal;
characterised by:
(f) the detected clock phase signals being written in the memory so that a stored clock phase signal for a particular time slot is overwritten by the detected clock phase signal for the repeat of that time slot;
(g) detecting whether an error rate of the decoded signal is higher or lower than a prescribed value; and
(h) if the detected error rate is lower than the prescribed value repeating the steps (b) to (g), and if the detected error rate is higher than the prescribed value repeating the steps (c) to (e) and (g).

4. A method as claimed in claim 3, wherein such a detected clock phase signal is written at the end of the respective time slot, and that clock phase signal is read at the beginning of the repeat of that time slot.

## Patentansprüche

1. Vorrichtung zum Decodieren eines Signals, das eine sich wiederholende Sequenz von Zeitschlitzen aufweist, die einen Datenanfangs-Kennsatz für Taktzeitablaufrückgewinnung und ein codiertes Digitalsignal enthalten, welche Vorrichtung aufweist:
einen Phasendetektor (11) zum Detektieren von Taktphasen der Datenanfangskennsätze der Zeitschlitze und zum davon Ableiten von Taktphasensignalen dafür;
Speichermittel (13), die eine Mehrzahl von Speicherplätzen haben;
Speichersteuermittel (12, 20) zum Schreiben eines so detektierten Taktphasensignals eines solchen Zeitschlitzes in einen der Speicherplätze und zum Lesen eines Taktphasensignals für eine Wiederholung des Zeitschlitzes von den Speichermitteln;
Taktrückgewinnungsmittel (14), die auf das gelesene Taktphasensignal zum Ableiten von Taktpulsen reagieren; und
einen Decoder (15), der mit den abgeleiteten Taktpulsen synchronisiert ist, um das codierte Digitalsignal jedes Zeitschlitzes zu decodieren, um ein decodiertes Signal zu erzeugen;
dadurch gekennzeichnet, daß:
die Speichersteuermittel betreibbar sind, um die detektierten Taktphasensignale in die Speichermittel zu schreiben, so daß ein gespeichertes Taktphasensignal für einen individuellen Zeitschlitz durch das detektierte Taktphasensignal für die Wiederholung des Zeitschlitzes überschrieben wird; und
daß Detektormittel (18, 19) zum Detektieren einer Fehlerrate des decodierten Signals und zum Verhindern vorgesehen sind, daß die Speichersteuermittel ein solches gespeichertes Taktphasensignal überschreiben, wenn die detektierte Fehlerrate höher ist als ein vorgegebener Wert.

2. Vorrichtung nach Anspruch 1, bei dem die Speichersteuermittel Mittel zum Schreiben eines solchen detektierten Taktphasensignals am Ende des entsprechenden Zeitschlitzes und Mittel zum Lesen dieses Taktphasensignals am Beginn der Wiederholung des Zeitschlitzes einschließen.

3. Verfahren zum Decodieren eines Signals, das eine sich wiederholende Sequenz von Zeitschlitzen aufweist, von denen jeder einen Datenanfangskennsatz für Taktzeitablaufrückgewinnung und ein codiertes Digitalsignal enthält, welches Verfahren die Schritte aufweist:
(a) Taktphasen der Datenanfangkennsätze der Zeitschlitze zu detektieren und davon entsprechende Taktphasensignale dafür abzuleiten;
(b) ein solches detektiertes Taktphasensignal eines solchen Zeitschlitzes in einen einer Mehrzahl von Speicherplätzen (13) zu schreiben;
(c) ein Taktphasensignal für eine Wiederholung dieses Zeitschlitzes vom Speicher zu lesen;
(d) Taktpulse als Reaktion auf das gelesene Taktphasensignal abzuleiten; und
(e) das codierte Digitalsignal jedes Zeitschlitzes synchron mit den abgeleiteten Taktpulsen zu decodieren, um ein decodiertes Signal zu erzeugen;
gekennzeichnet
(f) dadurch, daß die detektierten Taktphasensignale in den Speicher geschrieben werden, so daß ein gespeichertes Taktphasensignal für einen bestimmten Zeitschlitz durch das detektierte Taktphasensignal für die Wiederholung des Zeitschlitzes überschrieben wird;
(g) daß detektiert wird, ob die Fehlerrate des decodierten Signals größer oder kleiner ist als ein vorgegebener Wert; und
(h) daß die Schritte (b) bis (g) wiederholt werden, wenn die detektierte Fehlerrate kleiner ist als der vorgegebene Wert, und daß die Schritte (c) bis (e) und (g) wiederholt werden, wenn die detektierte Fehlerrate größer ist als der vorgegebene Wert.

4. Verfahren nach Anspruch 3, bei dem ein solches detektiertes Taktphasensignal am Ende des entsprechenden Zeitschlitzes geschrieben wird, und daß dieses Taktphasensignal am Beginn der Wiederholung dieses Zeitschlitzes gelesen wird.

## Revendications

1. Dispositif pour décoder un signal ayant une séquence de répétition de tranches de temps dont chacune contient un préambule pour une récupération de synchronisation d'horloge et un signal numérique codé, le dispositif comprenant :
un détecteur de phase (11) pour détecter des phases d'horloge des préambules des tranches de temps et dériver de celles-ci des signaux de phase d'horloge pour celles-ci ;
des moyens à mémoire (13) comportant une pluralité d'emplacements de mémoire ;
des moyens de commande de mémoire (12, 20) pour écrire ce signal de phase d'horloge détecté de cette tranche de temps dans l'un des emplacements de mémoire et pour lire un signal de phase d'horloge pour une répétition de cette tranche de temps dans les moyens à mémoire ;
des moyens de récupération d'horloge (14) réagissant au signal de phase d'horloge lu pour dériver des impulsions d'horloge ; et,
un décodeur (15) synchronisé avec les impulsions d'horloge dérivées pour décoder le signal numérique codé de chaque tranche de temps afin de produire un signal décodé ;
caractérisé en ce que :
les moyens de commande de mémoire peuvent être mis en fonctionnement pour écrire les signaux de phase d'horloge détectés dans les moyens à mémoire de sorte qu'un signal de phase d'horloge stocké pendant une tranche de temps particulière soit recouvert par superposition d'écriture du signal de phase d'horloge détecté pour la répétition de cette tranche de temps ; et,
des moyens détecteurs (18, 19) sont prévus pour détecter un taux d'erreurs du signal décodé et empêcher que les moyens de commande de mémoire fassent une superposition d'écriture d'un signal de phase d'horloge stocké quand le taux d'erreurs détecté est supérieur à une valeur imposée.

2. Dispositif selon la revendication 1, dans lequel les moyens de commande de mémoire comprennent des moyens pour écrire ce signal de phase d'horloge détecté à la fin de la tranche de temps correspondante, et des moyens pour lire ce signal de phase d'horloge au début de la répétition de cette tranche de temps.

3. Méthode de décodage d'un signal ayant une séquence de répétition de tranches de temps dont chacune contient un préambule pour une récupération de synchronisation d'horloge et un signal numérique codé, la méthode comprenant les étapes de :
(a) détection de phases d'horloge des préambules des tranches de temps et dérivation de celles-ci de signaux de phase d'horloge respectifs pour celles-ci ;
(b) écriture de ce signal de phase d'horloge détecté de cette tranche de temps dans l'un d'une pluralité d'emplacements d'une mémoire (13) ;
(c) lecture d'un signal de phase d'horloge pour une répétition de cette tranche de temps dans la mémoire ;
(d) dérivation d'impulsions d'horloge en réponse au signal de phase d'horloge lu ; et,
(e) décodage du signal numérique codé de chaque tranche de temps en synchronisme avec les impulsions d'horloge dérivées pour produire un signal décodé ;
caractérisée par :
(f) les signaux de phase d'horloge détectés qui sont écrits dans la mémoire de sorte qu'un signal de phase d'horloge stocké pendant une tranche de temps particulière soit recouvert par superposition d'écriture par le signal de phase d'horloge détecté pour la répétition de cette tranche de temps ;
(g) détection si un taux d'erreurs du signal décodé est supérieur ou inférieur à une valeur imposée ; et,
(h) si le taux d'erreurs détecté est inférieur à la valeur imposée, répétition des étapes (b) à (g), et si le taux d'erreurs détecté est supérieur à la valeur imposée, répétition des étapes (c) à (e) et (g).

4. Méthode selon la revendication 3, dans laquelle ce signal de phase d'horloge détecté est écrit à la fin de la tranche de temps correspondante, et ce signal de phase d'horloge est lu au début de la répétition de cette tranche de temps.
